# EUROPÄISCHE PATENTANMELDUNG

(11) **EP 0 860 974 A2**
(43) Veröffentlichungstag der Anmeldung: **26.08.1998**
(21) Anmeldenummer: 98440030.9
(22) Anmeldetag: 19.02.1998
(51) Int. Cl.: H04M 3/42, H04M 7/00

(54) **Diensteinheit zur Unterstützung des Verbindungsaufbaus sowie Vermittlungsstelle, Dienststeuereinrinchtung, Kommunikationsnetz und Verbindungsaufbauverfahren**

(30) Priorität: 21.02.1997 DE 19707039
(71) Anmelder: ALCATEL ALSTHOM COMPAGNIE GENERALE D'ELECTRICITE, 75008 Paris (FR)
(72) Erfinder: Horrer, Matthias, Raleigh, N.C. 27615 (US); Lautenschlager, Wolfgang, 71287 Weissacht-Flacht (DE); Stahl, Uwe, 71229 Leonberg (DE)
(74) Vertreter: Zinsinger, Norbert

(57) **Zusammenfassung**

1. Für den Aufbau einer Verbindung wird in einem Kommunikationsnetz (KN) von einem Endgerät (T1) eines rufenden Teilnehmer (A) eine von zwei oder mehreren verschiedenartigen möglichen Teilnehmerkennungen (UA), die alle den gerufenen Teilnehmer (B) adressieren, zu einer Diensteinheit (SU) des Kommunikationsnetzes (KN) gesendet. Die Diensteinheit (SU) greift auf eine Datenbank (DB) zu, die verschiedene Arten von Teilnehmerkennungen (UA) verwaltet und in der zwei oder mehr verschiedenartigen Teilnehmerkennungen (UA) jeweils ein gerufener Teilnehmer (B) zugeordnet ist. Mittels dem Datenbankzugriff ermittelt die Diensteinheit (SU) aus der empfangenen Teilnehmerkennung (UA) eine dem gerufenen Teilnehmer (B) zugeordnete Netzadresse (RN), die ein Endgerät (T2) des gerufenen Teilnehmer (B) in dem Kommunikationsnetz (KN) adressiert. Die Verbindung zwischen dem rufenden Teilnehmer (A) und dem gerufenen Teilnehmer (B) wird sodann mittels der Netzadresse (RN) aufgebaut.

## Beschreibung

Die Erfindung betrifft eine Diensteinheit zur Unterstützung des Aufbaus von Verbindungen zwischen Teilnehmern eines Kommunikationsnetzes, eine Vermittlungsstelle eines Kommunikationsnetzes, eine Dienststeuereinrichtung eines Kommunikationsnetzes, ein Kommunikationsnetz und ein Verfahren zum Aufbau einer Verbindung zwischen einem rufenden und einem gerufenen Teilnehmer eines Kommunikationsnetzes.

In einem üblichen Fernsprechnetz wählt der Teilnehmer zur Einleitung des Verbindungsaufbaus zu einem gerufenen Teilnehmer normalerweise die dem gerufenen Teilnehmer zugeordnete Rufnummer. Diese Rufnummer entspricht der Netzadresse des Teilnehmeranschlusses des gerufenen Teilnehmers im Fernsprechnetz und kennzeichnet somit direkt einen Teilnehmeranschluß des Fernsprechnetzes. Die Rufnummer wird beim Verbindungsaufbau in der Verbindungsanforderung mitgeführt und wird in den Vermittlungsstellen des Fernsprechnetzes direkt zur Leitweglenkung und zur Lokalisierung des gerufenen Teilnehmers verwendet.

Diese Art der Adressierung eines Teilnehmers in einem Kommunikationsnetz hat Nachteile, wenn ein Teilnehmer über mehrere Teilnehmerendgeräte verfügt. Dem rufenden Teilnehmer müssen alle Rufnummern dieser Teilnehmerendgeräte bekannt sein, um den gerufenen Teilnehmer erreichen zu können.

Des weiteren sind Konzepte bekannt, die eine auf den Teilnehmer und nicht auf den Teilnehmeranschluß gerichtete Adressierung erlauben und somit diesen Nachteil überwinden. Ein solches Konzept wird beispielsweise in dem Artikel "Universal Personal Telecommunication (UPT) - Concept and Standardisation" von Jonas Sundborg, Ericsson Review No. 4, 1993, Seiten 140 bis 154 beschrieben.

Jedem Teilnehmer ist hierbei eine einzigartige, ihn kennzeichnende, netzwerktransparente UPT-Nummer zugeordnet. Der Nummernplan für die UPT-Nummern ist standardisiert nach E.168, wobei die Nummernstruktur an die Empfehlung für den ISDN-Rufnummernplan nach E.164 angelehnt ist. Die UPT-Nummer besteht aus drei Teilen, einem Länderkode, einer UPT-Dienstanbieterkennung und einer Teilnehmernummer.

Beim Verbindungsaufbau wird die UPT-Nummer durch das Kommunikationsnetz zum UPT-Dienstanbieter geleitet und von diesem dann derjenige Teilnehmeranschluß ermittelt, über den der Teilnehmer im Augenblick erreichbar ist. Die diesem Teilnehmeranschluß zugeordnete physikalische Netzadresse wird ermittelt und sodann für den Verbindungsaufbau zum gerufenen Teilnehmer verwendet. Bei dieser Netzadresse handelt es sich üblicherweise um die Rufnummer des ermittelten Teilnehmeranschlusses.

Bei all diesen bekannten Verfahren zur Adressierung eines Teilnehmers in einem Kommunikationsnetz stellt sich jedoch das Problem, daß dem rufenden Teilnehmer eine speziell für diese Art der Kommunikation mit dem gerufenen Teilnehmer vorgesehene Nummer bekannt sein muß.

Dieses Problem wird sich bei zunehmender Anzahl von Kommunikationsformen (Telefon, E-Mail, Adresse in unterschiedlichen Daten netzen) weiter verschärfen.

Der Erfindung liegt nun die Aufgabe zugrunde, die Erreichbarkeit eines Teilnehmer zu verbessern.

Diese Aufgabe wird gelöst durch eine Diensteinheit zur Unterstützung des Aufbaus von Verbindungen zwischen Teilnehmern eines Kommunikationsnetzes nach der Lehre von Anspruch 1, eine Vermittlungsstelle eines Kommunikationsnetzes nach der Lehre von Anspruch 3, eine Dienststeuereinrichtung eines Kommunikationsnetzes nach der Lehre von Anspruch 4, ein Kommunikationsnetz nach der Lehre Anspruch 6 und ein Verfahren zum Aufbau einer Verbindung zwischen einem rufenden und einem gerufenen Teilnehmer eines Kommunikationsnetzes nach der Lehre von Anspruch 7.

Der Erfindung liegt hierbei der Gedanke zugrunde, einem Teilnehmer zwei oder mehr verschiedenartige Teilnehmerkennungen zuzuordnen, mittels denen allen der Teilnehmer in einem Kommunikationsnetz adressiert werden kann. Dem rufenden Teilnehmer stehen somit mehrere Teilnehmerkennungen verschiedener Art (Zahlenkombinationen, Buchstabenkombinationen, E-Mail Syntax) zur Verfügung, um den gerufenen Teilnehmer zu erreichen.

Vorteilhafte Ausgestaltungen der Erfindung sind den Unteransprüchen zu entnehmen.

Hierbei ist es insbesondere vorteilhaft, Teilnehmerkennungen für einen Teilnehmer vorzusehen, die dem Teilnehmer zugeordnete Adressen in einer anderen Kommunikationsform sind, beispielsweise als Teilnehmerkennung in einem Fernsprechnetz die E-Mail Adresse des Teilnehmers vorzusehen.

Im folgenden wird die Erfindung anhand zweier Ausführungsbeispiele unter Zuhilfenahme beiliegender Zeichnungen erläutert.

Fig. 1 zeigt ein Blockschaltbild eines Kommunikationssystems mit einer erfindungsgemäßen Dienststeuereinrichtung.

Fig. 2 zeigt eine symbolische Darstellung des Funktionsablaufes für die Dienststeuereinrichtung nach Fig. 1.

In dem ersten Ausführungsbeispiel wird der Ablauf des erfindungsgemäßen Verbindungsaufbauverfahrens unter Verwendung einer erfindungsgemäßen Diensteinheit erläutert, die Teil einer erfindungsgemäßen Dienststeuereinrichtung eines erfindungsgemäßen Kommunikationsnetzes ist.

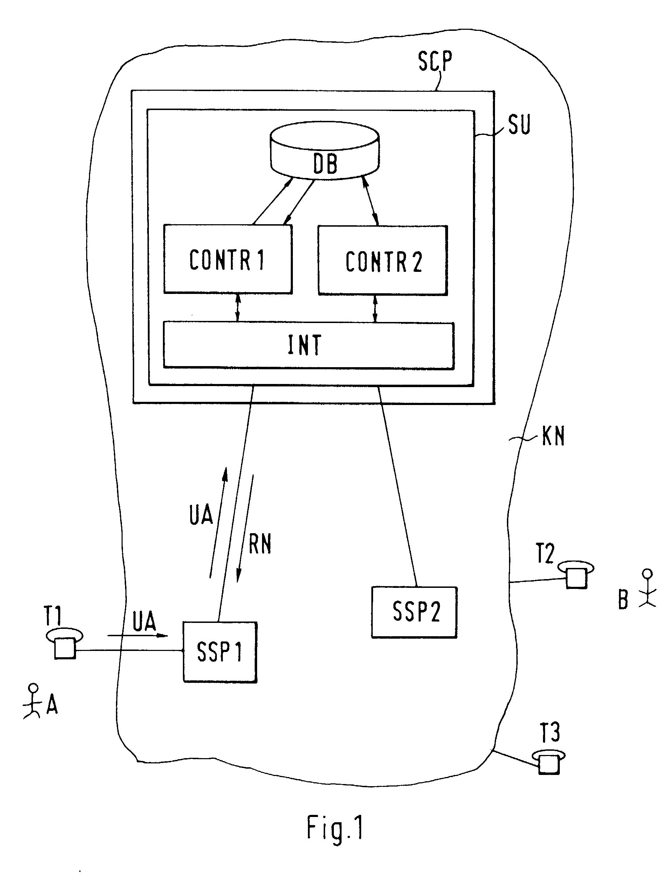

Fig. 1 zeigt eine Kommunikationsnetz KN, drei mit diesem verbundene Endgeräte T1 bis T3 und eine Dienststeuereinrichtung SCP. Das Endgerät T1 ist einem Teilnehmer A und die Endgerät T2 und T3 einem Teilnehmer B zugeordnet.

Das Kommunikationsnetz KN ist ein öffentliches Fernsprechnetz. Es ist jedoch auch möglich, daß das Kommunikationsnetz KN von einer Vielzahl von Kommunikationsnetzen unterschiedlicher Teilnehmeranschlußnetz-, Fernnetz oder Mobilfunknetzbetreiber gebildet wird, und somit ein globales Fernsprechnetz darstellt. Das Kommunikationsnetz KN kann auch ein privates Netz sein oder private Kommunikationsnetze mitumfassen.

Von den Vermittlungsstellen des Kommunikationsnetzes KN sind in Fig. 1 nur zwei besonders ausgestaltete Vermittlungsstellen SSP1 und SSP2 beispielhaft gezeigt. Bei diesen Vermittlungsstellen handelt es sich um Dienstvermittlungsstellen, die beim Empfang einer speziellen Dienstkennung oder automatisch Anfragen an die Dienststeuereinrichtung SCP senden und als Antwort darauf Steuerinformationen von der Dienststeuereinrichtung SCP empfangen, die den weiteren Verbindungsaufbau betreffen.

Die Dienststeuereinrichtung SCP erbringt Dienste für die mit ihr verbundenen Vermittlungsstellen, hier die Vermittlungsstellen SSP1 und SSP2. Sie besteht aus einer Rechnerplattform mit entsprechenden peripheren Komponenten zur Kommunikation mit den Vermittlungsstellen SSP1 und SSP2, auf denen eine oder mehrere jeweils einen Dienst steuernden Applikations-Programme aufsetzen. Ein solches Applikations-Programm zusammen mit den darunterliegenden Schichten bildet hierbei funktionell eine Diensteinheit, die den Dienst erbringt. Von diesen Diensteinheiten ist in Fig. 1 eine Diensteinheit SU gezeigt, bei der es sich um eine erfindungsgemäße Diensteinheit handelt.

Es ist hierbei vorteilhaft, daß die Dienstvermittlungstellen SSP1 und SSP2 und die Dienststeuereinrichtung SCP hierbei gemäß den Kommunikationsmechanismen und der funktionellen Aufteilung der IN-Architektur (IN = Intelligent Network) zusammenwirken.

Der Aufbau einer Verbindung vom Teilnehmer A zum Teilnehmer B wird wie folgt durchgeführt:

Der Teilnehmer A sendet über sein Endgerät T1 eine Verbindungsanforderung zusammen mit einer den Teilnehmer B adressierenden Teilnehmerkennung UA an das Kommunikationsnetz KN.

Es ist dem Teilnehmer A hierbei möglich, verschiedene Arten von Teilnehmerkennungen zu verwenden, um den Teilnehmer B zu adressieren. Er kann eine dem Teilnehmer B zugeordnete logische Teilnehmerrufnummer verwenden, er kann eine dem Teilnehmer B zugeordneten E-Mail Adresse verwenden, er kann eine dem Teilnehmer B zugeordnete logische Adresse in einem Datennetz verwenden oder er kann eine dem Teilnehmer B zugeordnete postalische Adresse verwenden. Alle diese syntaktisch vollkommen verschiedenartig aufgebauten Adressen kann der Teilnehmer A als Teilnehmerkennung für den Teilnehmer B verwenden, wobei diesen Adressen eine von der ursprünglichen Semantik vollkommen abweichende neue Semantik zugewiesen ist, nämlich die der Adressierung des Teilnehmers B im Kommunikationsnetz KN.

Es ist auch möglich, daß der Teilnehmer A weitere Adressarten oder eine Auswahl aus diesen oder aus obigen Adressarten verwenden kann.

Diese Verbindungsanforderung und mit ihr die Teilnehmerkennung UA wird durch das Kommunikationsnetz KN zu der Vermittlungsstelle SSP1 geleitet, die die Teilnehmerkennung UA an die Dienststeuereinrichtung SCP weiterreicht.

Die Weiterleitung der Verbindungsanforderung mit der Teilnehmerkennung UA an die Vermittlungsstelle SSP1 und das Weiterreichen der Teilnehmerkennung UA erfolgt hierbei aufgrund einer in der Verbindungsanforderung eingetragen Kennung oder aufgrund der Detektion der Teilnehmerkennung UA. Es ist jedoch auch möglich, daß alle Verbindungsanforderungen vom Endgerät T1 automatisch zur Vermittlungsstelle SSP1 geleitet werden und eine Anfrage an die Dienststeuereinrichtung SCP auslösen.

Es ist hierbei vorteilhaft, in der Verbindungsanforderung eine spezielle Kennung vorzusehen, die angibt, ob diese Verbindungsanforderung als übliche Verbindungsanforderung mit einer Rufnummer oder als Verbindungsanforderung mit einer Teilnehmerkennung zu behandeln ist.

Die Dienststeuereinrichtung empfängt die Teilnehmerkennung UA und wertet sie aus. Sie ermittelt, welchem Teilnehmer die Teilnehmerkennung UA zugeordnet ist und bestimmt die Netzadresse desjenigen Teilnehmeranschlusses des Kommunikationsnetzes KN, über den dieser Teilnehmer augenblicklich erreichbar ist. Dies ist in diesem Beispiel der Teilnehmeranschluß des Endgerätes T2 mit einer Netzadresse RN. Die Netzadresse hat hierbei eine derartige Form und einen derartigen Informationsgehalt, daß sie im Kommunikationsnetz KN direkt zur Wahl des Verbindungsweges zu diesem adressierte Teilnehmeranschluß dienen kann. Die Netzadresse hat somit beispielsweise die Form einer üblichen Rufnummer für ein Fernsprechnetz.

Es ist auch möglich, daß die Teilnehmerkennung UA semantisch auch die Information enthält, welchen Service (z.B. Telefon, Fax) des gerufenen Teilnehmers angesprochen wird und dann eine servicespezifische Umwertung in eine Netzadresse erfolgt.

Die Netzadresse RN wird an die Vermittlungsstelle SSP1 zurückgemeldet. Diese trägt die Netzadresse RN wird in die Verbindungsanforderung als Ziel-Adresse ein und veranlaßt den Verbindungsaufbau im Kommunikationsnetz KN durch Signalisierung dieser Verbindungsanforderung. Die Netzadresse RN wird hierbei von den Vermittlungsstellen des Kommunikationsnetze KN direkt dazu verwendet, die Leitweglenkung zum Teilnehmeranschluß des Endgerätes T2 durchzuführen. Gemäß dem Weg der Verbindungsanforderung wird sodann die Verbindung zwischen dem Teilnehmeranschluß des Endgerätes T1 und dem des Endgerätes T2 aufgebaut.

Im folgenden wird der funktionelle Aufbau der Diensteinheit SU und das Verbindungsaufbauverfahren detaillierter beschrieben:

Die Diensteinheit SU weist eine Datenbank DB, zwei Steuereinheiten CONTR1 und CONTR2 und eine Schnittstelleneinheit INT auf.

Die Schnittstelleneinheit INT dient dem Empfang der Teilnehmerkennung UA sowie der Durchführung von Steuerungsfunktionen für den Empfang der Teilnehmerkennung UA von an das Kommunikationsnetz KN angeschlossenen Endgeräten.

Da die Schnittstelleneinheit verschiedenartige Teilnehmerkennungen zu empfangen hat, von denen die meisten von dem normierten, in dem Kommunikationsnetz KN vorgesehenen Datenformat für die Übertragung der Rufnummer abweichen, arbeitet die Schnittstelleneinheit INT gemäß einem der folgenden Verfahren:

Handelt es sich bei dem Endgerät T1 um ein ISDN-Endgerät (ISDN = Integrated Services Digital Network) so ist die Teilnehmerkennung in dem Signalisierungs-Datenpakete der Verbindungsanforderung eingetragen, das über den ISDN D-Kanal vom Endgerät T1 zur Vermittlungsstelle SSP1 transportiert wird. Die Schnittstelleneinheit INT weist hierbei die Vermittlungsstelle SSP1 an, dem Signalisierungs-Datenpaket dies die Teilnehmerkennung betreffenden Daten zu entnehmen und an sie zu senden.

Es ist auch möglich, daß die Teilnehmerkennung UA nicht in diesem Signalisierungs-Datenpaket mittransportiert wird, sondern in einem zusätzlichen Datenpaket über den ISDN D-Kanal vom Endgerät T1 an die Vermittlungsstelle SSP1 gesendet und von dort transparent an die Empfangseinheit INT weitergesendet wird. Die Empfangseinheit INT würde in diesem Fall die Übertragung dieses Datenpakets durch entsprechende Steuerbefehle steuern. Hierbei ist es weiter möglich, daß die Empfangseinheit INT das Endgerät T1 zum Senden von Daten mit der Teilnehmerkennung UA auffordert, in dem es mittels der Vermittlungsstelle SSP1 eine entsprechende Aufforderungsnachricht über den ISDN D-Kanal zum Endgerät T1 sendet.

Handelt es sich beim Endgerät T1 um ein analoges Endgerät, so wird beim Empfang einer Verbindungsanforderung mit einer Kennung, die anzeigt, daß die angeforderte Verbindung durch eine Teilnehmerkennung adressiert ist, von der Empfangseinheit der Aufbau eines Nutzkanals zum Endgerät T1 veranlaßt. Die Teilnehmerkennung UA wird sodann vom Endgerät T1 in kodierter Form über diesen aufgebauten Nutzkanal zur Vermittlungsstelle SSP1 gesendet und dort durch einen Dekodierer wieder in ein digitales Format gewandelt. Eine solche Kodierung kann beispielsweise durch mehrere unterschiedliche Töne wie beim Mehrfrequenzwahlverfahren oder durch ein bei einem Modem für die Übertragung von digitalen Daten über Nutzkanäle verwendeten Kodierverfahren erfolgen.

Es ist hierbei auch möglich, daß die Empfangseinrichtung das Anfordern der Teilnehmerkennung z. B. durch Senden einer entsprechenden Sprachansage veranlaßt.

Weiter ist es möglich, daß die Empfangseinheit über eine Spracherkennungseinheit verfügt, die vom Teilnehmer A gesprochene Teilnehmerkennungen erkennt und in entsprechender gewandelter digitaler Form bereitstellt. Eine solche Sprachkodierung ist sowohl mit analogen als auch mit ISDN-Endgeräten möglich.

Es ist auch möglich, daß die Empfangseinheit ein mit der Vermittlungsstelle verbundenes Dienstunterstützungssystem (IP = Intelligent Peripheral) steuert, das über Empfangs-, Sende-, Kodier- und Spracherkennungseinrichtungen verfügt, die die Kommunikation zwischen der Empfangseinheit INT und dem Endgerät T1 unterstützen.

Die Datenbank DB weist eine Datenstruktur auf, die es ermöglicht, zwei oder mehr verschiedenartige Teilnehmerkennungen einem Teilnehmer zuzuordnen und sodann dem Teilnehmer eine Netzadresse zuzuordnen.

Eine erste Möglichkeit hierfür ist, daß die Datenbank DB eine gemischte Liste aller Teilnehmerkennungen aller Teilnehmer des Kommunikationsnetzes KN enthält, wobei jedem solchen Listeneintrag eine Netzadresse zugeordnet ist.

Eine zweite Möglichkeit ist, daß für jede Art von Teilnehmerkennung eine eigene Liste oder eine eigene Datenbank vorgesehen ist, was zu einer starken Vereinfachung des Datenformates führt.

Eine weitere Möglichkeit ist, Teilnehmerkennungen direkt eine Netzadresse zuzuordnen, wodurch Speicherplatz eingespart wird, sich der Aufwand bei Änderung der einem Teilnehmer zugeordneten Netzadresse jedoch erhöht. Es ist auch möglich, daß die Datenbank DB nicht in der Dienststeuereinrichtung SCP angeordnet ist, sondern in einem mit der Dienststeuereinrichtung über eine Kommunikationsverbindung verbundenen Rechnersystem angeordnet ist. Bei der Datenbank DB kann es sich hierbei auch um eine verteilte Datenbank handeln, bei der die Daten auf mehrere Rechner aufgeteilt gespeichert sind.

Die Steuereinheit CONTR1 ordnet mittels Zugriff auf die Datenbank DB einer über die Empfangseinheit INT empfangenen Teilnehmerkennung eine Netzadresse zu.

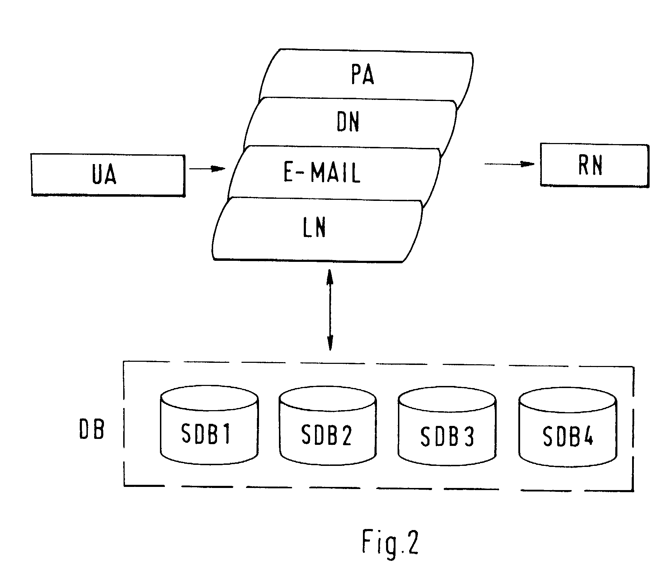

Eine vorteilhafte Funktionsweise der Steuereinheit CONTR1 wird nun anhand von Fig. 2 erläutert.

Fig. 2 zeigt die empfangene Teilnehmerkennung UA, die ermittelte Netzadresse RN, vier Funktionsmodule PA, DN, E-MAIL, LN und mehrere Unter-Datenbanken SDB1 bis SDB4, die die Datenbank DB bilden.

Aus der Teilnehmerkennung UA wird zuerst bestimmt, welcher Art von Teilnehmerkennung die Teilnehmerkennung UA zugeordnet ist. Dies kann beispielsweise aus der Syntax, also dem Aufbau der Teilnehmerkennung ermittelt werden. Es ist jedoch auch möglich, daß jede Teilnehmerkennung einen Indikator enthält, der anzeigt, welcher Art von Teilnehmerkennung diese spezielle Teilnehmerkennung zugeordnet ist. Mittels eines solchen Indikators kann dann die Artbestimmung auf einfache Weise erfolgen.

Je nach Art der Teilnehmerkennung, also ob es sich um die logische Teilnehmerrufnummer, um die e-mail Adresse, um die Datennetz-Adresse oder um die postalische Adresse des gerufenen Teilnehmers handelt, wird sodann in die Funktionsmodule LN, E-MAIL, DN bzw. PA verzweigt. Jede dieser Funktionsmodule greift auf eine ihr zugeordnete der Unter-Datenbanken SDB1 bis SDB4 zu. In jeder dieser Unter-Datenbanken ist eine gemäß der Syntax der jeweiligen Teilnehmerkennung geordnete Liste all derjenigen Teilnehmerkennungen gespeichert, die von dieser Art sind und einem der Teilnehmer des Kommunikationsnetzes KN zugeordnet sind. Diese Liste wird von dem jeweiligen Funktionsmodul mittels eines an die Syntax der Art der dort gespeicherten Teilnehmerkennungen angepaßten Suchalgorithmus durchsucht.

Es ist auch möglich, daß die Steuereinheit CONTR1 die Datenbank DB, die eine gemischte Liste von Teilnehmerkennungen enthält, mittels eines üblichen Suchalgorithmuses nach der empfangenen Teilnehmerkennung durchsucht.

Die Steuereinheit CONTR2 ermöglicht es einem Teilnehmer, die ihm in der Datenbank DB zugeordneten Teilnehmerkennung zu verändern. Die Steuereinheit CONTR2 führt hierbei zuerst eine Authorisierungsprozedur durch, in der ein auf die Steuereinheit zugreifender Teilnehmer des Kommunikationsnetzes KN sich durch Eingabe einer seiner Teilnehmerkennungen und eines Paßwortes identifiziert. Danach ist es ihm möglich, menügesteuert die ihn betreffenden Teilnehmerkennungen in der Datenbank zu verändern oder aber auch neue Teilnehmerkennungen oder neue Arten von Teilnehmerkennungen für sich einzurichten.

In einem zweiten Ausführungsbeispiel wird der Aufbau einer erfindungsgemäßen Vermittlungsstelle erläutert.

Eine solche Vermittlungsstelle enthält neben den üblichen Funktionsgruppen die Funktionsgruppen der Diensteinheit SU nach Fig. 1 und Fig. 2. Im unterschied zum ersten Ausführungsbeispiel entfällt die funktionelle Trennung zwischen Dienstvermittlungsstelle und Dienststeuereinrichtung, die Diensteinheit greift direkt in die Steuerung der Vermittlungsstelle ein, sie ist Teil der Steuerung der Vermittlungsstelle.

Es ist hierbei vorteilhaft, daß die Datenbank DB eine zentrale Einrichtung ist, auf die von mehreren Vermittlungsstellen aus zugegriffen wird. Die erfindungsgemäß ausgestaltete Vermittlungsstelle ist vorteilhafter Weise die Teilnehmervermittlungsstelle des Teilnehmers A.

Das erste und zweite Ausführungsbeispiel kann natürlich auch auf andersartig Kommunikationsnetze übertragen werden. So kann es sich bei dem Kommunikationsnetz KN beispielsweise auch um ein Bereitband-, Video-, Multi-Media- oder Datennetz handeln.

## Patentansprüche

1. Diensteinheit (SU) zur Unterstützung des Aufbaus von Verbindungen zwischen Teilnehmern (A, B) eines Kommunikationsnetzes (KN), wobei die Diensteinheit (SU) mit einer Empfangseinheit (INT) zum Empfang von verschiedenartigen Teilnehmerkennungen (UA), die jeweils einen gerufenen Teilnehmer (B) adressieren und von einem rufenden Teilnehmer (A) an die Diensteinheit (SU) geleiteten werden, versehen ist, wobei die Diensteinheit (SU) mit einer Datenbank (DB) versehen oder verbunden ist, die verschiedene Arten von Teilnehmerkennungen (UA) verwaltet und in der zwei oder mehr verschiedenartigen Teilnehmerkennungen (UA) jeweils ein gerufener Teilnehmer (B) zugeordnet ist, und wobei die Diensteinheit (SU) mit einer ersten Steuereinheit (CONTR1 ) versehen ist, die so ausgestaltet ist, daß sie mittels Zugriff auf die Datenbank (DB) jeder der zwei oder mehr verschiedenartigen Teilnehmerkennungen (UA) eines gerufenen Teilnehmers jeweils dieselbe Netzadresse (RN) zuordnet, die ein Endgerät (T2) des gerufenen Teilnehmers (B) in dem Kommunikationsnetz (KN) adressiert und den Aufbau der Verbindung zu dem gerufenen Teilnehmer (B) ermöglicht.

2. Diensteinheit (SU) nach Anspruch 1, dadurch gekennzeichnet, daß die Diensteinheit (SU) mit einer zweiten Steuereinheit (CONTR2) versehen ist, die so ausgestaltet ist, daß sie dem gerufenen Teilnehmer (B) eine Veränderung der ihm zugeordneten verschiedenartigen Teilnehmerkennungen (UA) in der Datenbank (DB) ermöglicht.

3. Vermittlungsstelle eines Kommunikationsnetzes mit einer Diensteinheit nach Anspruch 1, die in die Vermittlungsstelle integriert ist.

4. Dienststeuereinrichtung (SCP) eines Kommunikationsnetzes (KN), die mit einer oder mehreren Vermittlungsstellen (SSP1, SSP2) des Kommunikationsnetzes (KN) verbunden ist und mit einer Diensteinheit (SU) nach Anspruch 1 versehen ist.

5. Dienststeuereinrichtung (SCP) nach Anspruch 4, dadurch gekennzeichnet, daß die Dienststeuereinrichtung (SCP) eine Dienststeuereinrichtung gemäß der IN-Architektur ist.

6. Kommunikationsnetzes (KN) mit einer Empfangseinheit (INT) zum Empfang von verschiedenartigen Teilnehmerkennungen (UA), die jeweils einen gerufenen Teilnehmer (B) adressieren und von einem rufenden Teilnehmer (A) zum Aufbau einer Verbindung durch das Kommunikationsnetz (KN) an die Empfangseinheit (INT) geleiteten werden, mit einer Datenbank (DB), die verschiedene Arten von Teilnehmerkennungen (UA) verwaltet und in der zwei oder mehr verschiedenartigen Teilnehmerkennungen (UA) jeweils ein gerufener Teilnehmer (B) zugeordnet ist, und mit einer ersten Steuereinheit (CONTR1), die so ausgestaltet ist, daß sie mittels Zugriff auf die Datenbank (DB) jeder der zwei oder mehr verschiedenartigen Teilnehmerkennungen (UA) eines gerufenen Teilnehmers (B) jeweils dieselbe Netzadresse (RN) zuordnet, die ein Endgerät (T2) des gerufenen Teilnehmers (B) in dem Kommunikationsnetz (KN) adressiert und den Aufbau der Verbindung zu dem gerufenen Teilnehmer (B) ermöglicht.

7. Verfahren zum Aufbau einer Verbindung zwischen einem rufenden Teilnehmer (A) und einem gerufenen Teilnehmer (B) eines Kommunikationsnetzes (KN), wobei bei dem Verfahren vom Endgerät (T1 ) des rufenden Teilnehmer (A) zum Aufbau der Verbindung eine von zwei oder mehreren verschiedenartigen möglichen Teilnehmerkennungen (UA), die alle den gerufenen Teilnehmer (B) adressieren, zu einer Diensteinheit (SU) gesendet wird, die Diensteinheit (SU) auf eine Datenbank (DB) zugreift, die verschiedene Arten von Teilnehmerkennungen (UA) verwaltet und in der zwei oder mehr verschiedenartigen Teilnehmerkennungen (UA) jeweils ein gerufener Teilnehmer (B) zugeordnet ist, die Diensteinheit (SU) mittels dem Datenbankzugriff aus der empfangenen Teilnehmerkennung (UA) eine dem gerufenen Teilnehmer (B) zugeordnete Netzadresse (RN) ermittelt, die ein Endgerät (T2) des gerufenen Teilnehmers (B) in dem Kommunikationsnetz (KN) adressiert, und die Verbindung zwischen dem rufenden Teilnehmer (A) und dem gerufenen Teilnehmer (B) mittels der Netzadresse (RN) aufgebaut wird.

8. Verfahren nach Anspruch 7, dadurch gekennzeichnet, daß die Diensteinheit (SU) die Art der empfangenen Teilnehmerkennung (UA) ermittelt und je nach Art der empfangenen Teilnehmerkennung (UA) auf eine artspezifische Unter-Datenbank (SDB1 bis SDB4) zugreift.

9. Verfahren nach Anspruch 8, dadurch gekennzeichnet, daß die Diensteinheit (SU) einen ersten Indikator der empfangenen Teilnehmerkennung (UA) auswertet, der die Art der Teilnehmerkennung anzeigt.

10. Verfahren nach Anspruch 7, dadurch gekennzeichnet, daß eine erste Art von Teilnehmerkennungen (UA) syntaktisch wie eine postalische Adresse (PA) gebildet wird.

11. Verfahren nach Anspruch 7, dadurch gekennzeichnet, daß eine zweite Art von Teilnehmerkennungen (UA) syntaktisch wie eine elektronische Post Adresse (E-MAIL) gebildet wird.

12. Verfahren nach Anspruch 7, dadurch gekennzeichnet, daß eine dritte Art von Teilnehmerkennungen (UA) syntaktisch wie eine logische Rufnummer (LN) gebildet wird.

13. Verfahren nach Anspruch 7, dadurch gekennzeichnet, daß als Teilnehmerkennungen (UA) eines Teilnehmers (B) eine diesen semantisch in einer andere Kommunikationsform adressierende Kennung verwendet wird.

14. Verfahren nach Anspruch 7, dadurch gekennzeichnet, daß im Kommunikationsnetz ein zweiter Indikator ausgewertet wird, der anzeigt, ob eine Verbindungsanforderung eine Teilnehmerkennung oder eine Netzadresse enthält.
